Europäisches Patentamt

European Patent Office

Office européen des brevets

(19)

(11) Numéro de publication: **0 230 188**
**B1**

(12) **FASCICULE DE BREVET EUROPEEN**

(45) Date de publication du fascicule du brevet:
04.04.90

(51) Int. Cl.⁴: **C03C 17/30,** C03C 17/38,
C23C 14/12

(21) Numéro de dépôt: 86402839.4

(22) Date de dépôt: 17.12.86

(54) Film organo-minéral déposé sur un substrat en verre éventuellement revêtu d'une ou plusieurs couches métalliques minces.

(30) Priorité: 17.12.85 FR 8518673

(43) Date de publication de la demande:
29.07.87 Bulletin 87/31

(45) Mention de la délivrance du brevet:
04.04.90 Bulletin 90/14

(84) Etats contractants désignés:
AT BE CH DE FR GB IT LI LU NL SE

(56) Documents cités:
EP-A- 104 870
DD-A- 215 302
FR-A- 2 311 102
FR-A- 2 535 650

CHEMICAL ABSTRACTS,
vol. 103, no. 6, août 1985, page 265, résumé no. 41387v,
Columbus, Ohio, US; & DD-A-215 302 (VEB CHEMIEANLAGENBAUKOMBINAT LEIPZIG-GRIMMA) 07-11-1984
THIN SOLID FILMS,
vol. 86, no 2/3, décembre 1981, pages 125-135, Elsevier Sequoia, NL; H. BIEDERMAN: "Deposition of polymer films in low pressure reactive plasmas"

(73) Titulaire: SAINT-GOBAIN VITRAGE INTERNATIONAL, 18, avenue d'Alsace, F-92400 Courbevoie(FR)

(72) Inventeur: Brochot, Jean-Pierre, 5, rue du Général Maud'Hui, F-75014 Paris(FR)
Inventeur: Sohier, Philippe, Les Aulnaies 65, rue Jean Michelet, F-60140 Liancourt(FR)
Inventeur: Ceccaroli, Bruno, Gunnar Schelderupsvei 204, N-6930 Svelgen(NO)

(74) Mandataire: Leconte, Jean-Gérard et al, Saint-Gobain Recherche 39, Quai Lucien Lefranc, F-93304 Aubervilliers Cedex(FR)

## Description

La présente invention concerne un film transparent d'un composé organo-minéral, en particulier d'un composé organo-silicié déposé sous plasma, ce film étant déposé sur un substrat, en verre ou à base de verre.

Cette technique de dépôt dite «dépôt sous plasma» consiste à introduire les matériaux à déposer sur le substrat, dans une décharge électrique de faible énergie.

Elle présente des avantages qui en font une technique industriellement intéressante:
. une pression de travail n'exigeant que des «vides primaires» 0,1–10 Torr (13–1330 Pa),
. la possibilité d'apport du matériau à déposer, sous forme gazeuse, évitant l'élaboration, la surveillance et le recyclage de produits complexes et coûteux et permettant d'autre part des mélanges réactionnels homogènes et soigneusement dosés,
. une faible consommation énergétique permettant de travailler à la température ambiante.

Une telle technique s'appplique en particulier au dépôt de couches protectrices destinées à éviter la dégradation – soit lors d'une phase de fabrication ultérieure, soit en vieillissement naturel – de couches à basse émissivité, spécialement celles à base d'argent du type de celles décrites dans la demande de brevet européenne EP-A 0 104 870.

Les méthodes de dépôt de couches et spécialement de composés organo-silicés ont été décrites d'une manière très générale dans la revue Thin Solid Films Vol. 86, n° 2/3, décembre 1981 dans l'article «Deposition et Polymer films in low pressure reactive plasma» de H. Biederman pages 127 à 130.

La technique de dépôt sous plasma sur le verre a été décrite, elle, dans le brevet D-DA 215 302, elle est utilisée pour déposer une couche d'un dérivé organo-silicié sur la face interne de tubes qui constituent l'élément visuel permettant le contrôle du niveau d'hydrocarbures. La couche joue alors le rôle de promoteur d'adhérence pour le dépôt d'autres couches par des méthodes différentes. Mais la fonction de cette sous-couche, la nature et la géométrie du substrat de même que les conditions d'élaboration du plasma sont très particulières, spécifiques de ce type de couches et par conséquent difficilement transposables au verre plat et au problème posé ici.

Par ailleurs, cette technique a déjà été utilisée comme décrit dans la demande de certificat d'utilité français 2 535 650 pour déposer sur un film plastique souple préalablement revêtu d'une série de couches métalliques minces, «un polymérisat de plasma» «en siloxane».

On constitue ainsi un matériau isolant souple apparemment destiné après fabrication à être appliqué sur une vitre, sur des stores, etc..., donc à être associé à un support plus rigide dont la fabrication et en particulier la mise en forme serait terminée.

Cependant cette technique n'a pas été utilisée dans les domaines verriers pour constituer des couches, directement sur du verre ou sur un substrat à base de verre lorsque ce verre ou ce substrat à base de verre qui serait ainsi revêtu, doit subir ultérieurement des traitements classiques des produits verriers, à savoir en particulier bombage, trempe, etc..., et/ou présenter les caractéristiques de solidité, de résistance aux bases, acides, agents divers, de résistance à la rayure et en général a l'abrasion, etc..., qu'on demande aux produits verriers.

La présente invention vise à fournir un produit en verre ou à base de verre, revêtu d'un film de composé organo-silicié polymérisé sous plasma, présentant, outre des propriétés de transparence, de non absorption dans le visible, des caractéristiques de résistance à l'abrasion, de résistance aux traitements auxquels on peut soumettre des produits verriers tels que bombage, trempe, etc..., de façon que les phases de mise en forme, de traitement du produit verrier, ses utilisations, ne soient pas modifiées par rapport à celles d'un produit verrier classique exempt d'un tel film organo-silicié.

Il en résulte non seulement un nombre d'opérations pour fabriquer les produits verriers revêtus, inférieur au nombre d'opérations qu'il faudrait si l'on utilisait le processus du film mince revêtu qu'il faut ensuite associer au matériau verrier comme décrit dans le certificat d'utilité francais n° 2 535 650 déjà cité, mais également il en résulte une possibilité de travailler uniquement sur des matériaux verriers plats, avec des installations de revêtement simples, quitte à bomber et éventuellement également tremper ultérieurement ces matériaux revêtus. Bien entendu si le fait de ne revêtir que des matériaux plats est une possibilité offerte, ce n'est malgré tout pas, selon l'invention, une obligation, le dépôt d'organo-silicié pourrait être fait sur des produits verriers déjà en forme et/ou déjà trempés.

L'invention propose pour cela un film de composé organosilicique déposé sur un substrat en verre, directement ou sur une couche intermédiaire et obtenu par polymérisation sous plasma en présence d'oxygène et ou la décharge créant le plasma a une fréquence inférieure à un mégaherz et où l'épaisseur du film est au maximum de l'ordre de 10 nanomètre.

Pour certaines applications, en particulier celles où un indice de réfraction bas est requis, le film obtenu est soumis à un recuit à une température supérieure à 350°C et de préférence de l'ordre de 370 à 500°C.

L'invention propose également un procédé de formation d'un film organo-silicié.

A titre d'application, elle propose également un substrat en verre revêtu de couches minces préalablement déposées parmi lesquelles figure au moins une couche de métal, ces couches minces étant recouvertes ultérieurement d'un film organo-silicié déposé sous plasma.

2

Elle propose notamment un substrat en verre revêtu préalablement des couches minces suivantes qui se superposent dans cet ordre en partant du substrat : diélectrique tel que $SnO_2$, métal tel Ag, métal tel Al ou l'un des métaux appartenant au groupe Al, Ti, Ta, Cr, Mn, Zr, Cu, diélectric tel que $SnO_2$ éventuellement remplacé par du film organo silicié polymérisé sous plasma, puis finalement en surface film organo-silicié polymérisé sous plasma.

En variante de l'application précédente, l'invention propose de remplacer le diélectrique directement au contact du substrat par une épaisseur de film organo-silicié polymérisé sous plasma.

A titre d'autre application, l'invention propose un substrat recouvert d'une couche mince pyrolysée obtenue par décomposition à la chaleur puis oxydation d'un composé métallique ayant au-dessus de la couche pyrolysée un film organo-silicié polymérisé sous plasma, de préférence recuit à température d'au moins 350°C, atténuant le mouchetis du vitrage faiblement émissif ainsi constitué.

A titre d'application l'invention propose aussi des surfaces anti-reflet.

L'invention propose également un dispositif de dépôt d'un film organo-silicié en recouvrement d'un substrat, préalablement revêtu d'un empilement de couches parmi lesquelles figure une couche métallique, ou ultérieurement revêtu d'au moins une couche, dans lequel le système de production de la décharge électrique réalisant le plasma est installé dans un sas d'entrée ou de sortie d'une cloche à vide dans laquelle est effectué le dépôt des couches ou dans une chambre accolée à ladite cloche.

L'invention sera maintenant décrite plus en détail en référence aux figures jointes qui représentent :

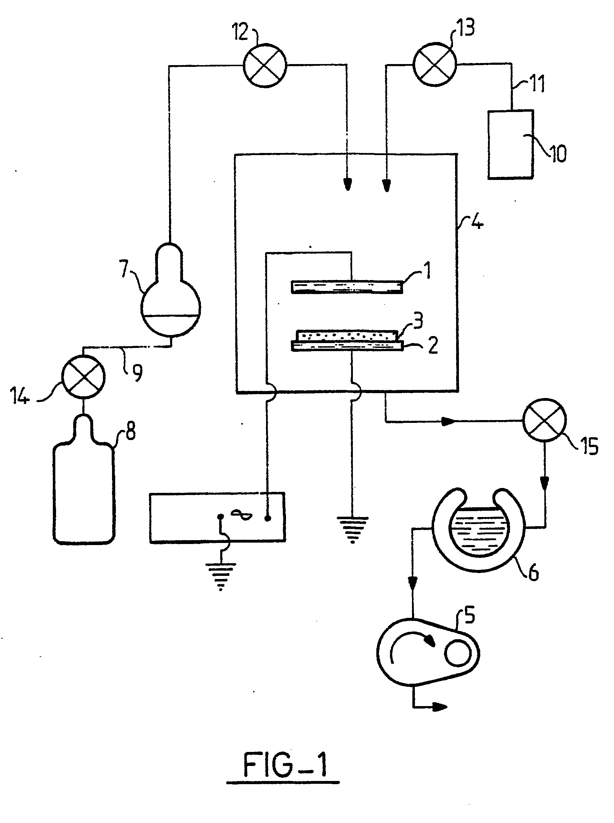

. Figure 1 : un schéma de principe d'un système réalisant le plasma,

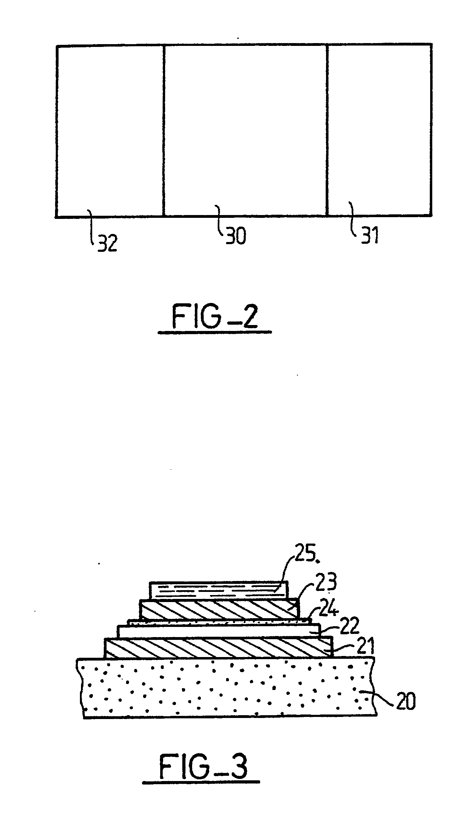

. Figure 2 : un schéma illustrant la position de ce système dans le sas à la sortie d'une cloche à vide,

. Figure 3 : une coupe d'un vitrage faiblement émissif ayant un empilement de couches minces, recouvert d'un film selon l'invention.

La figure 1 montre le schéma de principe d'un système réalisant un plasma dans lequel peut se polymériser un monomère distribué sous forme gazeuse.

Le plasma est obtenu par une décharge électrique par exemple créée par couplage capacitif entre deux électrodes 1 et 2 disposées à distance l'une de l'autre, par exemple à 2 cm, l'une de ces électrodes par exemple celle référencée 2 étant à la masse et portant un substrat 3 sur lequel on désire recueillir le polymère, l'autre étant reliée à un générateur électrique de puissance maximale de l'ordre de 800W. De préférence, pour obtenir des croissances d'épaisseur régulières du film polymère et une homogénéité de dépôt sur toute la surface du substrat, on travaille à des fréquences de l'ordre de 10 à 100 KHz.

La zone de travail, c'est à dire essentiellement celle limitée par les plaques 1 et 2 est à l'intérieur d'une enceinte 4 maintenue sous vide grâce à une pompe 5 précédée d'un piège à azote liquide 6.

Un vide primaire de l'ordre de 0,1 à 10 Torr (13–1330 Pa) suffit.

Le monomère destiné à se polymériser, initialement contenu dans un réservoir 7 est injecté seul dans l'enceinte 4, et il se vaporise alors du fait de sa pression de vapeur saturante ou il est entrainé par un gaz porteur par exemple du type argon contenu dans une bouteille 8 et acheminé au travers du monomère par la conduite 9.

Avantageusement, notamment pour favoriser la formation de certains polymères, et/ou pour améliorer la qualité de la couche en particulier sa dureté, sa résistance aux agents suceptibles de l'attaquer, sa solidité, au gaz porteur ou indépendamment du gaz porteur, on ajoute une proportion d'oxygène qui peut aller, par exemple jusqu'à environ 50%. Cela facilite la formation de liaisons avec l'oxygène. Dans la mesure où il n'est pas fait appel à un gaz porteur ou lorsque l'oxygène n'est pas mélangé initialement au gaz porteur, une réserve 10 de gaz plasmagène, par exemple Ar, éventuellement avec un ajout d'oxygène, est reliée à l'enceinte 4 par le tuyau 11. Des vannes 12, 13, 14, 15 sont prévues sur les différents circuits. L'oxygène peut aussi être introduit indépendamment de tout autre gaz.

Ce système peut fonctionner indépendamment de tout autre, cependant dans la mesure où il s'agit d'effectuer un dépôt sous plasma sur un substrat préalablement ou ultérieurement traité sous vide, par exemple pour le dépôt de couches minces métalliques, il est avantageux de profiter du vide du traitement préalable ou ultérieur. Ainsi une installation de traitement sous vide comporte de façon classique comme montré figure 2 de façon schématique, une chambre 30 de travail sous vide où s'effectue une évaporation thermique ou une pulvérisation cathodique avec ou sans magnétron, précédée d'un sas d'entrée 31 et suivie d'un sas de sortie 32.

Avantageusement, on installe le système de dépôt sous plasma montré figure 1, à l'intérieur de l'un des sas d'entrée 31 ou de sortie 32 ou dans une chambre supplémentaire non représentée, accolée à la chambre de travail 30.

Pour réaliser des dépôts de composés organo-siliciés sous plasma, sur des substrats en verre, on utilise comme monomères les composés appartenant au groupe qui comprend l'héxaméthyldisiloxane (HMDOS), l'héxaméthyldisilazane (HMDS) et en général les alkylsilazanes, le vinyltriméthoxysilane (VTMOS), le vinyldiméthyléthoxysilane (VDMEOS), le diméthyldiéthoxysilane (DMDEOS), le triméthyléthoxysilane (TMEOS), le tétraméthoxysilane (TMOS) et en général les alkoxysilanes, les alkylsilanes.

Les films obtenus à partir de ces monomères ont l'avantage d'être transparents, non absorbants dans le visible, de posséder un indice de réfraction du même ordre que celui du verre et plus précisément un indice de l'ordre de 1,45 et qui peut suivant les cas s'échelonner entre 1,35 et 1,60.

Suivant les applications recherchées, le film organo-silicié peut être déposé directement sur le substrat ou sur une couche ou un empilement de couches métalliques et/ou d'oxyde métallique préalablement déposées.

Les épaisseurs de film envisagées pourront aller de 20 nanomètres à 2 microns en fonction des applications prévues.

Pour certaines applications et en particulier quand un bas indice de réfraction est voulu, lesdits films déposés sur leur substrat sont soumis à un traitement thermique de recuit, consistant en un passage à une température compatible avec le substrat, supérieure à 350°C, et de préférence de l'ordre de 370 à 500°C. Ce recuit peut se faire à l'air ou sous atmosphère contrôlée, en particulier inerte lorsque sous le film organo-silicié sont présentes des couches de métaux non oxydés tel Ag.

Les films organo-siliciés déposés comme indiqué précédemment, peuvent avoir différentes applications.

Selon une première application, ils peuvent constituer des films protecteurs de couches minces préalablement déposées, en particulier lorsque parmi ces couches figure au moins une couche de métal susceptible de s'oxyder et en général de se corroder.

Ainsi à titre d'exemple on peut citer l'empilement de couches minces déposées sous vide sur un substrat en verre, comprenant, tel que montré sur la figure 3, outre le substrat 20, une première couche 21, de diélectrique et en particulier d'oxyde d'étain ($SnO_2$) en contact direct avec ledit substrat 20, une couche 22 de métal tel l'argent (Ag) et une couche superficielle 23 de diélectrique tel que $SnO_2$. Eventuellement, mais cependant le plus fréquemment, en interface entre la couche de métal 22 et la couche superficielle 23 existe un dépôt supplémentaire 24 de faible épaisseur (0,1 à 5 nm) d'un métal tel que Al et par exemple appartenant au groupe comprenant Al, Ti, Ta, Cr, Mn, Zr, Cu. Ce dépôt 24 ne modifie pas les caractéristiques de l'empilement, mais il évite l'oxydation de la couche de métal 22 surtout lors du dépôt de la couche 23 en atmosphère oxydante. Selon l'invention, la couche 23 est recouverte d'une épaisseur supplémentaire 25 constituée d'un composé organo-silicié, déposé sous plasma. Ainsi recouvert, un vitrage ayant un tel empilement de couches possède une bien meilleure tenue à la corrosion et une plus grande aptitude aux traitements thermiques sans altération de la couche de métal 22, que les vitrages ayant le même empilement, mais non recouverts.

Des tests comparatifs de corrosion ont été faits sur deux vitrages tels que décrits précédemment, l'un étant recouvert d'un film 25 organo-silicié, l'autre n'étant pas recouvert. Pour cela les deux vitrages ont été placés dans une armoire climatique à 85°C et 95% d'humidité relative. Au bout de quelques heures seulement des piqures de corrosion sont apparues sur le vitrage muni de son empilement de couches minces, mais non recouvert du film organo-silicié, alors que l'autre vitrage restait intact.

Une épaisseur de film organo-silicié de l'ordre de 200 nanomètres confère une excellente protection vis à vis de la corrosion et malgré cette épaisseur, l'émissivité du vitrage n'est pratiquement pas dégradée. Des épaisseurs supérieures à 200 nanomètres confèrent aussi une excellente protection vis à vis de la corrosion, mais elles entraînent une absorption néfaste du rayonnement infra-rouge et par conséquent une diminution de l'émissivité.

Des épaisseurs plus faibles, de l'ordre de 40 à 80 nanomètres sont également efficaces.

Le tableau 1 disposé en fin de description exprime que l'émissivité est pratiquement inchangée pour des épaisseurs d'organo-silicié inférieures à 200 nanomètres ou de l'ordre de 200 nanomètres déposées sur un vitrage tel que celui montré figure 3, cette émissivité diminuant par contre pour des épaisseurs plus importantes.

Des tests comparatifs de tenue aux traitements thermiques ont également été effectués sur deux types de vitrages, les uns munis d'un empilement de couches de diélectrique et en particulier $SnO_2$, d'Ag, d'Al, de diélectrique et en particulier de $SnO_2$ puis recouverts d'un film organo-silicié, les autres simplement munis de l'empilement $SnO_2/Ag/Al/SnO_2$, sans recouvrement. Pour cela, les divers vitrages ont été soumis à des traitements thermiques de recuit à des températures de l'ordre de 630°C, à l'air, pendant des temps de l'ordre de 5 min, à la suite de quoi l'émissivité des vitrages a été mesurée et comparée à l'émissivité des mêmes vitrages avant traitement.

Il est apparu que dans le cas de vitrages recouverts d'un film organo-silicié, l'émissivité après traitement thermique était du même ordre de grandeur que l'émissivité avant traitement, alors qu'au contraire elle était fortement dégradée pour les vitrages non recouverts.

Les résultats de ces tests thermiques sont contenus dans le tableau 2 disposé en fin de description.

Ainsi donc un vitrage comportant des couches minces parmi lesquelles figure au moins une couche de métal du type Ag susceptible de se corroder en particulier lors d'un traitement thermique, supporte très bien ledit traitement thermique à condition de posséder en recouvrement de la couche de métal du type Ag, une épaisseur d'organo-silicié déposé sous plasma. Ainsi revêtu, un vitrage ayant au moins une couche de métal tel Ag, peut donc subir un réchauffage en vue d'être bombé et/ou trempé, sans que ce réchauffage n'altère les propriétés de la couche de métal.

L'invention permet donc de fabriquer des vitrages bombés et/ou trempés revêtus de couches parmi lesquelles figure au moins une couche de métal tel que l'Ag.

Suivant d'autres applications, les films de composés organo-siliciés déposés sous plasma constituent des couches à propriétés optiques capables d'améliorer les performances des vitrages qu'elles recouvrent.

Parmi ces applications où les propriétés optiques sont recherchées citons le revêtement de vitrages faiblement émissifs, le film étant alors intéressant essentiellement du fait de ses propriétés interférentielles.

Ainsi par exemple dans un vitrage du type de celui décrit précédemment et montré figure 3, à savoir composé d'un substrat en verre 20, d'une couche mince 21 de diélectrique tel que $SnO_2$, d'une couche mince 22 d'un métal tel Ag, associée à un dépôt 24 par exemple d'Al, d'une couche mince 23 de diélectrique tel que $SnO_2$, et éventuellement d'un film organo-silicié 25, le rôle de protection de la couche de métal 22, et le rôle d'adaptation optique ou d'effet interférentiel joué par la couche 23 de diélectrique peuvent être excercés par une couche d'organo-silicié déposé sous plasma. Dans ce cas donc le diélectrique de la couche 23 est partiellement ou totalement remplacé par un organo-silicié déposé sous plasma. L'épaisseur d'organo-silicié constituant la couche 23 ou participant à la constitution de la couche 23 est alors déterminée pour réaliser l'adaptation optique de l'ensemble du vitrage, et elle tient donc compte des couches sous-jacentes et aussi de la ou des éventuelles couches supérieures.

Pour simplifier l'explication nous avons considéré que la couche 23 lorsqu'elle est en organo-silicié déposé sous plasma et le film 25 également en organo-silicié déposé sous plasma, constituent deux épaisseurs distinctes. Il peut en être ainsi, lesdits deux épaisseurs étant déposées indépendamment l'une de l'autre, mais généralement il s'agira d'une épaisseur unique déposée en une seule fois et dont les dimensions seront adaptées pour jouer les différents rôles.

Dans la mesure où la couche 23 de $SnO_2$ n'existe plus, mais est remplacée par de l'organo-silicié, l'aluminium ou un métal analogue par exemple un métal du groupe Al, Ti, Ta, Cr, Mn, Zr, Cu n'a plus d'utilité puisqu'il n'y a plus d'oxydation à craindre pour l'argent lors du dépôt de la couche de $SnO_2$, dans la mesure bien entendu où la polymérisation sous plasma a lieu en absence d'oxygène.

Etant donné que l'oxygène pendant la polymérisation est au contraire fréquemment recherché pour obtenir des polymères particuliers et/ou pour obtenir une qualité particulière du film organo-silicié, notamment un film plus dur, plus solide, la couche d'Al, ou de métal équivalent, en récouvrement de Ag, est fréquemment maintenue.

Comme autre exemple de vitrage faiblement émissif où l'on exploite les propriétés interférentielles du film organo-silicié déposé sous plasma citons le cas d'un vitrage formé d'un substrat en verre revêtu d'une couche obtenue par pyrolyse d'un composé en poudre.

Ce vitrage se caractérise par une légère teinte correspondant à l'épaisseur de la couche et par des irrisations ou mouchetis dus aux faibles variations d'épaisseur. Du fait de son indice de réfraction, un film organo-silicié déposé sous plasma sur la couche pyrolysée, atténue le mouchetis, et ceci d'autant mieux que son indice est plus bas. En conséquence, essentiellement pour des raisons liées aux propriétés optiques, dans cette application particulière le film organo-silicié sera recuit.

On réalisera ainsi un vitrage ayant, à titre d'exemple, une couche pyrolysée à base de $SnO_2$ de 180 nanomètres d'épaisseur revêtue d'un film organo-silicié, par exemple (VDMEOS) déposé sous plasma, d'une épaisseur de 150 nanomètres avant recuit, ramenée à 100 nanomètres après un recuit à 450°C. De telles couches pyrolysées à base de $SnO_2$ sont par exemple décrites dans le brevet français publié sous le n° 2 542 636.

Les irrisations d'un tel vitrage sont fortement atténuées.

L'atténuation des irrisations s'obtient bien entendu sur les vitrages à couches pyrolysées obtenues à partir de poudre de tous types, à partir du moment où les épaiseurs de couches sont interférentielles et où les variations d'épaisseur dues au procédé de dépôt, entrainent des irrisations. Nous avons ainsi cité les couches de $SnO_2$, mais cela est donc également valable pour les autres, $In_2O_3$, etc...

Comme autres applications où les propriétés optiques sont recherchées, on peut encore citer l'application en tant qu'anti-reflet. En effet l'indice de réfraction d'un film organo-silicié déposé sous plasma peut être abaissé jusqu'à des valeurs de l'ordre de 1,35 en soumettant ledit film à un recuit à au moins 350°C. Or on réalise des surfaces anti-reflet lorsque celles-ci ont un indice n tel que $n^2 = n_s$, $n_s$ étant l'indice de réfraction du substrat qui les porte.

On constate que si le substrat est du verre d'indice $n_s = 1,518$, le dépôt sur lui d'un film d'indice de l'ordre de 1,37 atténue fortement les reflets, et celà sous des épaisseurs faibles de l'ordre de 100 nm et en général comprises entre 20 et 200 nanomètres. Le minimum de réflexion sur le verre traité se situe à 1,5% pour chaque face et l'on constate un bon achromatisme du traitement. Bien entendu les deux faces de substrat peuvent être recouvertes et/ou le substrat peut avoir été préalablement revêtu par une couche modifiant son indice.

Ainsi un substrat peut recevoir une superposition de couches d'organo-siliciés différents déposés sous plasma, où même des couches de différents composés organo-minéraux recouvertes d'organo-siliciés déposés sous plasma, ayant des indices différents les uns des autres et en particulier décroissants au fur et à mesure qu'on se rapproche de la surface. Ceci peut présenter un intérêt pour des vitrages destinés au bâtiment, aux véhicules en particulier automobiles, mais également pour des verres de lunetterie ou d'optique.

Comme autre application faisant intervenir les propriétés optiques de films organo-siliciés déposés sous plasma, on peut encore citer la coloration d'un vitrage. En effet en plus des autres fonctions déjà décrites, ou indépendamment de celles-ci, le film organo-silicié peut selon son épaisseur conférer différentes colorations lorsqu'il est superposé à d'autres couches. Cette capacité a être diversement coloré peut être exploitée pour modifier la teinte d'un vitrage ou pour teinter un vitrage non coloré.

Dans d'autres applications, les films organo-siliciés déposés sous plasma peuvent constituer des couches barrière faisant obstacle à la migration des ions contenus dans le substrat qu'ils revêtent ou dans les autres couches déposées au-dessus. Ainsi on sait que les ions alcalins, en particulier le sodium, contenus dans un substrat en verre, migrent dans les couches minces métalliques ou d'oxyde métallique déposées sur le substrat et, d'une part en amoindrissent les propriétés électriques et optiques, d'autre part forment un voile blanchâtre à l'interface entre le substrat et lesdites couches minces lorsque celle-ci sont obtenues à partir d'un halogénure.

Un film d'organo-silicié déposé sous plasma, directement en surface du substrat bloque la migration des ions au-delà dudit film évitant les inconvénients constatés dans l'art antérieur. Ainsi un film d'au moins 20 nanomètres jusqu'à des épaisseurs de l'ordre de 200 nanomètres d'épaisseur, par exemple de HMDS, et en général d'un organo-silicié, peut être déposé sur du verre avant qu'il ne reçoive une couche de $SnO_2$ ou autre, réalisée par pyrolyse ou CVD, ou technique sous vide sans entraîner de perturbation néfaste.

Bien entendu un film d'organo-silicié déposé en vue de remplir une fonction déterminée peut en même temps remplir d'autres fonctions et/ou un substrat éventuellement revêtu de couches métalliques, peut posséder plusieurs films organo-siliciés déposés sous plasma, les uns destinés à remplir certaines fonctions, les autres destinés à remplir d'autres fonctions.

Ainsi par exemple dans un vitrage du type de celui représenté figure 3, on a vu qu'un premier film organo-silicié déposé en recouvrement de l'ensemble du vitrage améliorait la résistance à la corrosion et l'aptitude à supporter les traitements thermiques, par exemple en vue d'un bombage et/ou d'une trempe ; on a vu également qu'un second film, éventuellement confondu avec le premier pouvait remplacer la couche mince de diélectrique déposée au dessus de la couche mince de métal, ce second film apportant lui-aussi une protection et une fonction optique. Mais il est également possible de remplacer la couche de diélectrique directement en contact avec le substrat, en sous-couche de la couche de métal, par un film organo-silicié déposé sous plasma, ce troisième film ayant plus spécialement une fonction optique, une fonction d'aide à l'accrochage de la couche de métal sur le substrat, une fonction de barrière.

Ainsi par emploi d'une pluralité de films organo-siliciés déposés sous plasma, on peut réaliser un vitrage du même type que celui montré figure 3, mais dont la structure est simplifiée. Ainsi à titre d'exemple non limitatif, on peut indiquer des épaisseurs des différentes strates constituant ce vitrage. Sur un substrat en verre, notamment verre float de 4 mm d'épaisseur on dépose un film organo-silicié de 55 nanomètres d'épaisseur puis une couche d'Ag de 10 nanomètres d'épaisseur, puis enfin un autre film organo-silicié de 55 nanomètres.

L'émissivité d'un tel vitrage est équivalente à celle d'un vitrage ayant l'empilement de couches minces $SnO_2/Ag/Al/SnO_2$ avec la même épaisseur d'argent.

Les différents films organo-siliciés entrant dans la structure d'un vitrage peuvent être obtenus à partir d'un même monomère, ou à partir de monomères différents.

Tableau 1

| Epaisseur du film d'organo-silicié en nanomètres | Emissivité du vitrage |
|---|---|
| 0 | 0,09 |
| 80 | 0,10 |
| 100 | 0,10 |
| 150 | 0,10 |
| 200 | 0,11 |
| 300 | 0,11 |
| 600 | 0,15 |
| 700 | 0,22 |
| 1100 | 0,27 |

Tableau 2

| Epaisseur organo-silicié avant recuit (nanomètres) | Température du recuit | Durée du recuit | Emissivité |
|---|---|---|---|
| 80 | 600 | 2'45" | 0,18 |
| 80 | 630 | 5' | 0,20 |
| 80 | 615 | 2'15" | 0,17 |
| 80 | 630 | 5' | 0,18 |
| 100 | 630 | 5' | 0,17 |
| 130 | 630 | 5' | 0,21 |
| 140 | 630 | 3' | 0,18 |
| 160 | 660 | 5' | 0,21 |
| 160 | 630 | 5' | 0,20 |
| 220 | 630 | 5' | 0,21 |
| 240 | 630 | 5' | 0,16 |
| 290 | 630 | 5' | 0,23 |
| 300 | 630 | 5' | 0,24 |
| 320 | 630 | 5' | 0,16 |
| 600 | 630 | 5' | 0,22 |
| 600 | 660 | 5' | 0,28 |
| 600 | 620 | 5' | 0,20 |
| 680 | 620 | 2'45" | 0,20 |
| 1080 | 630 | 5' | 0,27 |
| 0 | 630 | 5' | 0,75 |
| 0 | 0 | 0 | 0,09 |

## Revendications

1. Film de composé organosilicique déposé sur un substrat en verre, directement ou sur une couche intermédiaire et obtenu par polymérisation sous plasma en présence d'oxygène, caractérisé en ce que la décharge créant le plasma a une fréquence inférieure à un mégaherz et que l'épaisseur du film est au maximum de 100 nm.

2. Film selon la revendication 1, caractérisé en ce qu'il est recuit à une température supérieure à 350°C et de préférence de l'ordre de 370 à 500°C.

3. Procédé de formation d'un film selon la revendication 1 ou la revendication 2 consistant à introduire un monomère organo-silicié sous forme gazeuse dans une décharge électrique à l'intérieur d'une enceinte sous vide primaire, caractérisé en ce que la décharge est créée par un couplage capacitif entre deux électrodes disposées à quelques centimètres l'une de l'autre et notamment à environ deux centimètres, l'une étant reliée à la masse et supportant le substrat à revêtir, l'autre étant reliée à un générateur de puissance fonctionnant à des fréquences comprises entre 10 et 100 KHz.

4. Procédé selon la revendication 3, caractérisé en ce que la polymérisation a lieu en présence d'oxygène.

5. Procédé selon la revendication 4, caractérisé en ce que le monomère est véhiculé dans la zone de travail par un gaz porteur et en ce que la proportion d'oxygène peut atteindre jusque 50% environ du volume de gaz porteur.

6. Procédé selon l'une des revendications 3 à 5, caractérisé en ce que le film formé est recuit à une température supérieure à 350°C et de préférence de l'ordre de 370 à 500°C.

7. Procédé selon la revendication 6, caractérisé en ce que le recuit a lieu à l'air ou en atmosphère contrôlée, notamment inerte.

8. Dispositif pour mettre en œuvre le procédé selon l'une des revendications 3 à 7, comprenant une zone de travail dans une enceinte sous vide primaire limitée par deux électrodes entre lesquelles on crée une décharge électrique, caractérisé en ce que l'une de ces électrodes est reliée à la masse, et porte le substrat à revêtir, l'autre étant reliée à un générateur électrique de puissance et que le dispositif comporte une amenée d'un monomère sous forme gazeuse dans l'enceinte sous vide.

9. Dispositif selon la revendication 8, caractérisé en ce qu'il est disposé à l'intérieur de l'un des sas d'entrée ou de sortie, d'une installation sous vide de revêtement de substrats ou à l'intérieur d'une chambre accolée à ladite installation, à savoir installation de pulvérisation cathodique, avec ou sans magnétron, d'évaporation thermique, ayant une chambre de dépôt proprement dit précédée d'un sas d'entrée et suivie d'un sas de sortie.

10. Substrat en verre revêtu de couches minces préalablement déposées parmi lesquelles figure au moins une couche de métal notamment d'Ag, caractérisé en ce qu'il est recouvert ultérieurement d'un film selon l'une des revendications 1 ou 2.

11. Substrat en verre selon la revendication 10, caractérisé en ce que les couches minces comprennent une couche de diélectrique tel $SnO_2$ directement au contact du substrat, puis une couche de métal tel Ag, puis une couche d'Al ou un métal appartenant au groupe Al, Ti, Ta, Cr, Mn, Zr, Cu, puis une autre couche de diélectrique tel $SnO_2$ éventuellement remplacée par du film organo-silicié également déposé sous plasma.

12. Substrat en verre selon la revendication 10, caractérisé en ce que les couches minces comprennent un film organo-silicié déposé SOUS plasma, une couche de métal tel Ag, éventuellement de l'Al ou un métal appartenant au groupe Al, Ti, Ta, Cr, Nn, Zr, Cu, une épaisseur d'organo-silicié polymérisé sous plasma, cette épaisseur d'organo-silicié et le film de recouvrement également en organo-silicié pouvant éventuellement être déposés en une seule opération.

13. Substrat selon l'une des revendications 10 à 12, caractérisé en ce que le film organo-silicié déposé en recouvrement a une épaisseur 20 – 100 nm.

14. Substrat selon l'une des revendications 10 à 13, caractérisé en ce qu'il est trempé et/ou bombé après dépot du film de recouvrement organo-silicié et en ce que son émissivité de l'ordre de 0,20 est conservée malgré la trempe et/ou le bombage.

15. Substrat en verre revêtu d'une couche à basse émissivité obtenue par pyrolyse de composés métalliques, notamment en poudre, caractérisé en ce que sa couche pyrolysée est recouverte d'un film organo-silicié selon l'une des revendications 1 ou 2 en vue d'atténuer le mouchetis.

16. Substrat selon la revendication 15, caractérisé en ce que la couche pyrolysée est à base de $SnO_2$ ou de $In_2O_3$.

17. Substrat en verre éventuellement revêtu de couches minces de metal ou d'oxydes métalliques, caractérisé en ce qu'il est en outre recouvert d'un film organo-silicié selon l'une des revendications 1 ou 2 d'une épaisseur de 20 à 100 nm en vue de réaliser une surface anti-reflet.

18. Substrat selon la revendication 17, caractérisé en ce le verre est préalablement revêtu d'un film organo-silicié obtenu à partir d'un autre monomère polymérisé sous plasma présentant un indice de réfraction plus élevé que le film anti-reflet de recouvrement.

19. Substrat en verre ou à base de verre, caractérisé en ce qu'il est revêtu d'un film selon l'une des revendications 1 ou 2 préalablement à tout autre revêtement de métal ou d'oxyde métallique, de façon à réaliser une couche barrière efficace notamment vis à vis de la migration des ions du substrat en verre vers les couches métalliques ou d'oxydes métalliques minces déposées ultérieurement.

## Patentansprüche

1. Film aus einer Organosiliziumverbindung, der auf einem Glassubstrat direkt oder auf einer Zwischenschicht aufgebracht und durch Polymerisation unter Plasma in Gegenwart von Sauerstoff erhalten wird, dadurch gekennzeichnet, daß die das Plasma erzeugende Entladung eine Frequenz von weniger als ein Megaherz aufweist und die Dicke des Filmes höchstens 100 nm beträgt.

2. Film nach Anspruch 1, dadurch gekennzeichnet, daß er bei einer Temperatur von mehr als 350°C, vorzugsweise in einem Bereich von 370 bis 500°C, getempert wird.

3. Verfahren zur Bildung eines Filmes nach Anspruch 1 oder 2, bei dem ein organosiliziumhaltiges Monomer in gasförmigem Zustand in eine elektrische Entladung im Inneren eines abgeschlossenen Raumes unter Vorvakuum eingeleitet wird, dadurch gekennzeichnet, daß die Entladung durch kapazitive Kopplung zwischen zwei Elektroden erzeugt wird, die wenige Zentimeter, insbesondere etwa zwei Zentimeter, voneinander beabstandet sind, wobei die eine mit der Masse verbunden ist und das zu beschichtende Substrat trägt und die andere mit einem Kraftgenerator verbunden ist, der mit Frequenzen zwischen 10 und 100 KHz arbeitet.

4. Verfahren nach Anspruch 3, dadurch gekennzeichnet, daß die Polymerisation in Gegenwart von Sauerstoff stattfindet.

5. Verfahren nach Anspruch 4, dadurch gekennzeichnet, daß das Monomer mit Hilfe eines Trägergases in die Arbeitszone befördert wird und daß der Sauerstoffanteil bis etwa 50% des Volumens des Trägergases erreichen kann.

6. Verfahren nach einem der Ansprüche 3 bis 5, dadurch gekennzeichnet, daß der gebildete Film bei einer Temperatur von mehr als 350°C, vorzugsweise in einem Bereich von 370 bis 500°C, getempert wird.

7. Verfahren nach Anspruch 6, dadurch gekennzeichnet, daß das Tempern in der Luft oder in einer, insbesondere inerten, Schutzgasatmosphäre, erfolgt.

8. Vorrichtung zur Durchführung des Verfahrens nach einem der Ansprüche 3 bis 7, mit einer Arbeitszone in einem abgeschlossenen Raum unter Vorvakuum, die durch zwei Elektroden begrenzt ist, zwischen denen eine elektrische Entladung erzeugt wird, dadurch gekennzeichnet, daß die eine Elektrode mit der Masse verbunden ist und das zu beschichtende Substrat trägt und die andere mit einem elektrischen Kraftgenerator verbunden ist und daß die Vorrichtung eine Zuleitung für ein Monomer in gasförmigem Zustand in den unter Vakuum stehenden abgeschlossenen Raum aufweist.

9. Vorrichtung nach Anspruch 8, dadurch gekennzeichnet, daß sie im Inneren entweder der Eintrittsoder der Austrittsschleuse einer Anlage zur Beschichtung von Substraten unter Vakuum oder im Inneren einer mit der Anlage verbundenen Kammer angeordnet ist, insbesondere einer Anlage zur Kathodenzerstäubung, mit oder ohne Magnetron, zur thermischen Verdampfung, mit der eigentlichen Niederschlagskammer, der eine Eintrittsschleuse vorausgeht und eine Austrittsschleuse folgt.

10. Substrat aus Glas, das mit dünnen Schichten bedeckt ist, die vorher darauf aufgebracht wurden und unter denen sich wenigstens eine Metallschicht insbesondere aus Ag befindet, dadurch gekennzeichnet, daß es nachträglich mit einem Film nach einem der Ansprüche 1 oder 2 beschichtet wird.

11. Substrat aus Glas nach Anspruch 10, dadurch gekennzeichnet, daß die dünnen Schichten eine Schicht aus einem Dielektrikum, wie $SnO_2$ in unmittelbarem Kontakt mit dem Substrat umfassen, danach eine Schicht aus einem Metall wie etwa Ag, danach eine Schicht aus Al oder einem Metall, das zur Gruppe Al, Ti, Ta, Cr, Mn, Zr, Cu gehört, danach eine weitere Schicht aus einem Nichtleiter wie $SnO_2$, die gegebenenfalls durch den ebenfalls unter Plasma aufgebrachten organosiliziumhaltigen Film ersetzt ist.

12. Substrat aus Glas nach Anspruch 10, dadurch gekennzeichnet, daß die dünnen Schichten einen unter Plasma aufgebrachten organosiliziumhaltigen Film aufweisen, eine Schicht aus Metall wie etwa Ag, ferner gegebenenfalls Al oder ein Metall aus der Gruppe Al, Ti, Ta, Cr, Mn, Zr, Cu, eine Dicke aus einer unter Plasma polymerisierten Organosiliziumverbindung, wobei diese Dicke aus einer unter Plasma polymerisierten Organosiliziumverbindung und der ebenfalls aus einer Organosiliziumverbindung bestehende Überzug gegebenenfalls in einem einzigen Arbeitsgang aufgebracht werden können.

13. Substrat nach einem der Ansprüche 10 bis 12, dadurch gekennzeichnet, daß der als Überzug aufgebrachte organosiliziumhaltige Film eine Dicke von 20 bis 100 nm aufweist.

14. Substrat nach einem der Ansprüche 10 bis 13, dadurch gekennzeichnet, daß es nach dem Aufbringen des organosiliziumhaltigen Überzuges vorgespannt und/oder gebogen wird und daß sein Emissionsvermögen in einer Größenordnung von 0,20 trotz des Vorspannens oder Biegens beibehalten wird.

15. Substrat aus Glas, das mit einer Schicht mit niedrigem Emissionsvermögen beschichtet ist, die durch Pyrolyse von metallischen Verbindungen, insbesondere aus Pulver, erhalten wurde, dadurch gekennzeichnet, daß seine pyrolysierte Schicht mit einem organosiliziumhaltigen Film nach einem der Ansprüche 1 oder 2 überzogen ist, um das gesprenkte Aussehen abzumildern.

16. Substrat nach Anspruch 15, dadurch gekennzeichnet, daß die pyrolysierte Schicht auf $SnO_2$ oder $In_2O_3$ basiert.

17. Substrat aus Glas, das gegebenenfalls mit dünnen Schichten aus Metall oder Metalloxiden beschichtet ist, dadurch gekennzeichnet, daß es zur Erzielung einer nichtreflektierenden Oberfläche zusätzlich mit einem organosiliziumhaltigen Film nach einem der Ansprüche 1 oder 2 mit einer Dicke von 20 bis 100 nm überzogen ist.

18. Substrat nach Anspruch 17, dadurch gekennzeichnet, daß das Glas vorher mit einem organosiliziumhaltigen Film beschichtet wird, der aus einem weiteren unter Plasma polymerisierten Monomer, das einen höheren Brechungsindex als der nichtreflektierende Überzug aufweist, erhalten wird.

19. Substrat aus Glas oder auf Glasbasis, dadurch gekennzeichnet, daß es mit einem Film nach einem der Ansprüche 1 oder 2 beschichtet ist, bevor irgendeine andere Beschichtung aus Metall oder Metalloxid aufgebracht wird, um eine wirksame Sperrschicht insbesondere gegen die Wanderung der Ionen des Glassubstrates in Richtung der nachträglich aufgebrachten feinen Metall- oder Metalloxidschichten zu erzielen.

## Claims

1. Film of organosilicon compound deposited on a glass substrate, either directly or on an intermediate layer, and produced by polymerization under plasma in the presence of oxygen, characterized in that the discharge creating the plasma has a frequency lower than 1 megahertz and that the thickness of the film is at most 100 nm.

2. Film according to claim 1, characterized in that it is baked at a temperature above 350°C and preferably of the order of 370 to 500°C.

3. A method of forming a film according to claim 1 or claim 2, consisting of introducing an organosilicon monomer in gaseous form into an electrical discharge inside an enclosure under primary vacuum, characterized in that the discharge is created by a capacitive coupling between two electrodes disposed at a few centimetres apart and notably at approximately two centimetres, the one being connected to earth and supporting the substrate to be coated, the other being connected to a power generator operating at frequencies between 10 and 100 kHz,

4. A method according to claim 3, characterized in that the polymerization takes place in the presence of oxygen.

5. A method according to claim 4, characterized in that the monomer is transported into the operating zone by a carrier gas and in that the proportion of oxygen may reach up to 50% approximately of the volume of carrier gas,

6. A method according to one of claims 3 to 5, characterized in that the film formed is baked at a temperature higher than 350°C and preferably of the order of 370 to 500°C.

7. A method according to claim 6, characterized in that the baking takes place in air or in a controlled atmosphere, notably inert atmosphere.

8. Apparatus for carrying out the method according to one of claims 3 to 7, comprising an operating zone in an enclosure, under primary vacuum, limited by two electrodes between which an electrical discharge is created, characterized in that the one of these electrodes is connected to earth and carries the substrate to be coated, the other being connected to an electrical power generator and in that the apparatus comprises a feed for a monomer in gaseous form into the evacuated enclosure.

9. Apparatus according to claim 8, characterized in that it is disposed inside the entry lock or the exit lock of a vacuum installation for coating substrates or inside a chamber connected to said installation, that is to say cathodic sputtering installation, with or without magnetron, or thermal evaporation installation having a deposition chamber proper preceded by an entry lock and followed by an exit lock.

10. Glass substrate coated with previously deposited thin layers, among which at least one layer is of metal, notably Ag, characterized in that it is later covered with a film according to one of claims 1 or 2.

11. Glass substrate according to claim 10, characterized in that the thin layers comprise a layer of dielectric such as $SnO_2$ directly in contact with the substrate, then a layer of metal such as Ag, then a layer of Al, or a metal belonging to the Al, Ti, Ta, Cr, Mn, Zr, Cu group, then another layer of dielectric such as $SnO_2$, possibly replaced by an organosilicon film also deposited under plasma.

12. Glass substrate according to claim 10, characterized in that the thin layers comprise an organosilicon film deposited under plasma, a layer of metal such as Ag, possibly of Al, or a metal belonging to the group Al, Ti, Ta, Cr, Mn, Zr, Cu, a thickness of organosilicon polymerized under plasma, this thickness of organosilicon and the covering film, also of organosilicon, being possibly deposited in a single operation.

13. Substrate according to one of claims 10 to 12, characterized in that the organosilicon film deposited as a covering has a thickness of 20 – 100 nm.

14. Substrate according to one of claims 10 to 13, characterized in that it is tempered and/or bended after deposition of the organosilicon covering film and in that its emissivity of the order of 0.20 is conserved in spite of the tempering and/or bending.

15. Glass substrate coated with a layer of low emissivity produced by pyrolysis of metallic compounds, notably in powder form, characterized in that its pyrolized layer is covered with an organosilicon film according to one of claim 1 or 2 for the purpose of reducing speckling.

16. Substrate according to claim 15, characterized in that the pyrolized layer is based upon $SnO_2$ or $In_2O_3$.

17. Glass substrate, possibly coated with thin layers of metal or metallic oxides, characterized in that it is, in addition, covered with an organosilicon film according to one of claims 1 or 2 having a thickness from 20 to 100 nm for the purpose of producing an anti-reflective surface,

18. Substrate according to claim 17, characterized in that the glass is previously coated with an organosilicon film produced from another monomer polymerized under plasma, having a refractive index higher than the anti-reflective covering film.

19. Substrate of glass or based upon glass, characterized in that it is coated with a film according to one of claims 1 or 2 prior to any other coating with metal or metallic oxide, in such a manner as to produce a barrier layer effective, notably, with respect to the migration of the ions from the glass substrate to the thin metallic or metallic oxide layers subsequently deposited.

FIG_1

FIG-2

FIG-3